# EUROPÄISCHE PATENTSCHRIFT

(11) **EP 2 763 826 B1**
(45) Veröffentlichungstag und Bekanntmachung des Hinweises auf die Patenterteilung: **28.03.2018**
(21) Anmeldenummer: 12768723.4
(22) Anmeldetag: 28.09.2012
(51) Int. Cl.: B26F 1/40, B29C 70/54

(54) **WERKZEUG ZUM HERSTELLEN EINES LOCHS IN EINEM BAUTEIL**
TOOL FOR PRODUCING A HOLE IN A COMPONENT
OUTIL POUR RÉALISER UN TROU DANS UN ÉLÉMENT

(30) Priorität: 04.10.2011 DE 102011054168
(43) Veröffentlichungstag der Anmeldung: 13.08.2014
(73) Patentinhaber: REHAU AG + Co, 95111 Rehau (DE)
(72) Erfinder: MÜLLER, Claus, 95028 Hof (DE)
(86) Internationale Anmeldenummer: PCT/EP2012/004072
(87) Internationale Veröffentlichungsnummer: WO 2013/050123

(56) Entgegenhaltungen:
- WO-A1-01/21354
- DE-A1- 1 435 301
- JP-A- 56 113 442

## Beschreibung

Die Erfindung betrifft ein Werkzeug zum Herstellen eines Lochs in einem Bauteil sowie ein Verfahren zum Herstellen des Lochs in einem Bauteil.

Die Auslegeschrift DE 1 017 243 beschreibt ein Verfahren zur Herstellung von Löchern in Gehäusen aus schmelzbaren Kunststoffen, bei dem ein erhitztes Werkzeug durch einen Kunststoffkörper gestoßen wird. Durch dieses Verfahren können jedoch lediglich Löcher einer geringen Präzision erzeugt werden.

Die Übersetzung der europäischen Patentschrift DE 639 16 357 T2 beschreibt ein Verfahren zum Bilden einer Durchgangsöffnung in einem faserverstärkten Verbundmaterial, bei dem eine Öffnung vorgeformt wird, die dann mittels eines Schleifwerkzeuges vergrößert wird. Dieses Verfahren erfordert jedoch einen großen technischen Aufwand und durchbricht durch den Schleifvorgang die Fasern des Materials, das dadurch geschwächt wird.

Ein gattungsgemäßes Werkzeug und ein gattungsgemäßes Verfahren können der Offenlegungsschrift DE 1 435 301 A1 entnommen werden.

Der vorliegenden Erfindung liegt die Aufgabe zugrunde, verstärkte Löcher in Bauteilen mit geringem Aufwand zu erzeugen, ohne das verwendete Material zu schwächen.

Diese Aufgabe wird durch das im Patentanspruch 1 angegebene Werkzeug sowie durch das im Patentanspruch 9 angegebene Verfahren gelöst. Vorteilhafte Ausführungsformen sind in den Unteransprüchen, der Beschreibung und den Zeichnungen angegeben.

Insbesondere wird die erfindungsgemäße Aufgabe durch ein Werkzeug zum Herstellen eines Lochs in einem Bauteil aus einem thermoplastischen, endlos-faserverstärkten und/oder duroplastischen, endlos-faserverstärkten Kunststoff mittels eines Dorns gelöst, mit einem oberen Werkzeugteil mit einer Öffnung zum Durchführen des Dorns und einem unteren Werkzeugteil mit einer Öffnung zum Einführen des Dorns, wobei das obere und/oder das untere Werkzeugteil an der Öffnung eine Kavität zum Aufnehmen des durch den Dorn beim Herstellen des Loches verdrängten Materials aufweisen. Durch dieses Werkzeug wird der Vorteil erreicht, dass sich Löcher in Bauteilen aus thermoplastischem, endlos-faserverstärktem und/oder duroplastischem, endlos-faserverstärkten Kunststoff in hoher Präzision und mit einer exakt vorgegebenen Form in einem Arbeitsgang herstellen lassen und, dass das bei der Herstellung verdrängtes Material dazu verwendet wird den Rand des Loches zu verstärken. Insbesondere kann durch das Werkzeug verhindert werden, dass sich im Bereich des Loches lokale Spannungen (insb. Spannungsspitzen) aufbauen, die zu einer frühzeitigen Materialermüdung führen, indem durch den Dorn verdrängtes Material in der Kavität aufgenommen wird und in Folge dessen um das Loch herum eine Aufdickung oder Wanddickenerhöhung des Bauteils resultiert. Die Aufdickung oder Wanddickenerhöhung führt zu einer Spannungsreduktion im Bereich des Loches, da die anliegenden Kräfte sich dann auf eine größere Querschnittsfläche verteilen. Besonders vorteilhaft ist die Verwendung des Werkzeuges in Verbindung mit Bauteilen aus endlos-faserverstärkten Kunststoffen (thermoplastisch oder duroplastisch), da bei der Herstellung des Loches die strukturelle Integrität der Fasern weitgehend beibehalten wird und bei der Herstellung des Loches die Festigkeit des Materials weitgehend unbeeinträchtigt bleibt.

Erfindungsgemäß entspricht das Gesamtvolumen der Kavität bei eingeführtem Dorn dem Volumen des durch den Dorn verdrängten Materials. Dadurch ergibt sich der Vorteil, dass das gesamte von dem Dorn verdrängte Material zu einer Formgestaltung des Loches verwendet wird und sich Spannungen im Material bzw. Bauteil im Bereich des Loches besonders wirksam vermeiden lassen.

In einer weiteren vorteilhaften Ausführungsform ist die Kavität um die Öffnung des oberen und/oder unteren Werkzeugteils herum ausgebildet. Dadurch wird der Vorteil erreicht, dass der gesamte Rand des Loches durch das verdrängte Material verstärkt wird.

In einer weiteren vorteilhaften Ausführungsform ist die Kavität kreisförmig oder oval um die Öffnung des oberen und/oder unteren Werkzeugteils ausgebildet. Dadurch wird der Vorteil erreicht, dass der gesamte Rand des Lochs besonders gleichmäßig verstärkt wird.

In einer weiteren vorteilhaften Ausführungsform weist die Kavität eine konstante Tiefe auf. Durch die konstante Tiefe der Kavität wird der Vorteil erreicht, dass sich bei der Formgebung um das Loch herum eine Fläche konstanter Dicke ausbildet, die zum Aufsetzen von Bauteilen mit einer ebenen Fläche besonders geeignet ist, wie beispielsweise bei Schraubenköpfen.

In einer weiteren vorteilhaften Ausführungsform ist der äußere Rand der Kavität abgeschrägt. Durch das Abschrägen wird der Vorteil erreicht, dass im Bereich des Loches keine Kanten entstehen und ein Herauslösen des Bauteils aus dem Werkzeug erleichtert wird.

Der Verlauf der durch die Kavität ausgebildeten Aufdickung oder Wanddickenerhöhung des Bauteils kann so eingestellt werden, dass die Spannungsspitzen um das gebildete Loch weitgehend kompensiert werden. Beispielsweise durch eine Aufdickung oder Wanddickenerhöhung welche mit zunehmendem Abstand vom Loch abnimmt.

In einer weiteren vorteilhaften Ausführungsform nimmt die Tiefe der Kavität zur Öffnung des oberen und/oder unteren Werkzeugteils hin zu. Dadurch wird der Vorteil erreicht, dass das Loch an seinem Durchgangsbereich besonders gut verstärkt wird und besonders stabile Löcher erzeugt werden.

In einer weiteren vorteilhaften Ausführungsform weist die Kavität eine konkave Form auf. Durch die konkave Form wird der Vorteil erreicht, dass sich das verdrängte Material besonders gut um das Loch verteilt.

In einer weiteren vorteilhaften Ausführungsform weist der Dorn einen Spitzenwinkel im Bereich von 10° bis 60°, vorzugsweise im Bereich von 13° bis 45° weiter vorzugsweise im Bereich von 15° bis 30°, besonders bevorzugt im Bereich von 18° bis 25° auf. Bei diesen Winkelbereichen wird der Vorteil erreicht, dass sich das Material des Bauteils beim Herstellen des Loches besonders gut in der Kavität verteilt und beispielsweise die strukturelle Integrität von Endlosfasern beim Einführen des Dorns erhalten bleibt.

Das erfindungsgemäße Werkzeug kann allein die Aufgabe der Herstellung eines Lochs in einem Bauteil erfüllen, kann aber auch Teil eines Presswerkzeugs und/oder Spritzgusswerkzeugs sein in welches entsprechende Bauteile eingelegt und/oder in denen entsprechende Bauteile umgeformt und/oder in denen entsprechende Bauteile hergestellt werden. Im Fall eines Press- und/oder Spritzgusswerkzeuges befindet sich das Bauteil vorzugsweise in einem vorgewärmten Zustand und ist weiter vorzugsweise in einem nicht oder noch nicht vollständig vernetzten oder konsolidierten Zustand, so dass die Materialverdrängung durch den Dorn erleichtert ist und zudem bei Vorliegen eines Bauteiles aus einem endlosfaserverstärken Kunststoff (thermoplastisch oder duroplastisch) sich die Verstärkungsfasern umlagern können und weitgehend unbeschädigt bleiben.

Daneben wird die erfindungsgemäße Aufgabe durch ein Verfahren zum Herstellen eines Loches in einem Bauteil aus einem thermoplastischen, endlos-faserverstärkten und/oder aus einem duroplastischen, endlos-faserverstärkten Kunststoff mittels eines Dorns gelöst, mit den Schritten eines Einlegens des Bauteils in ein Werkzeug zwischen einem oberen Werkzeugteil und einem unteren Werkzeugteil mit jeweils einer Öffnung für den Dorn und Schließen des Werkzeugs, Durchführen des Dorns durch die Öffnung des oberen Werkzeugteils und Einführen des Dorns in die Öffnung des unteren Werkzeugteils zum Herstellen des Loches in dem Bauteil und Aufnehmen des durch den Dorn beim Herstellen des Loches verdrängten Materials in einer Kavität in dem oberen und/oder unteren Werkzeugteil. Durch dieses Verfahren werden die gleichen Vorteile wie durch das entsprechende Werkzeug erreicht.

Das Werkzeug kann ein Press- und/oder Spritzgusswerkzeug oder ein Teil eines Press- und/oder Spritzgusswerkzeug sein. Neben der Herstellung des Loches erfolgt in dem Press- und/oder Spitzgusswerkzeug vorher, parallel oder nachgelagert die Herstellung oder Fertigstellung des Bauteils.

Vorzugsweise befindet sich der thermoplastische, endlos-faserverstärkte Kunststoff des Bauteils bei Durchführung des erfindungsgemäßen Verfahrens in einem vorgewärmten (beispielsweise auf Konsolidierungs- oder Schmelztemperatur) Zustand. Bevorzugt weist der thermoplastische, endlos-faserverstärkte Kunststoff bei Durchführung des erfindungsgemäßen Verfahrens keine oder eine unvollständige Konsolidierung auf. Weiter vorzugsweise befindet sich der duroplastische, endlos-faserverstärkte Kunststoff des Bauteils bei Durchführung des erfindungsgemäßen Verfahrens in einem unvernetzten oder teilvernetzten Zustand.

Das Bauteil befindet sich vorzugsweise zwischen dem oberen Werkzeugteil und dem unteren Werkzeugteil, während sich das Werkzeug in einem geöffneten Zustand befindet. In einem nächsten Schritt werden das obere Werkzeugteil und das untere Werkzeugteil mit minimalem Formschließdruck (wie beispielsweise 10-15 Bar), auf das Bauteil gesetzt oder aufgelegt und der Dorn wird in die Öffnung eingeführt. Ein nachfolgender Konsolidierungsdruck, welcher gegenüber dem Formschließdruck erhöht ist, kann vorteilhafterweise um den Faktor 2 bis 15, vorzugsweise 4 bis 8 höher sein als der Formschließdruck und beispielsweise 100 bar betragen. Eine dementsprechende Konsolidierungstemperatur des Bauteils kann bei Polypropylen (PP) beispielsweise 240°C betragen.

In der erfindungsgemäßen Ausführungsform des Verfahrens entspricht das Gesamtvolumen der Kavität bei eingeführtem Dorn dem Volumen des durch den Dorn verdrängten Materials. Dadurch werden die gleichen Vorteile erreicht wie mit dem entsprechenden Werkzeug.

Ausführungsbeispiele der Erfindung sind in den Zeichnungen dargestellt und werden im Folgenden näher beschrieben.

Es zeigen:
- Fig. 1A: eine schematische, perspektivische Darstellung eines oberen Werkzeugteils mit einer Öffnung zum Durchführen eines Dorns;
- Fig. 1B: eine schematische, perspektivische Darstellung eines unteren Werkzeugteils mit einer Öffnung zum Durchführen eines Dorns;
- Fig. 2: eine schematische Querschnittsansicht durch ein Bauteil, den Dorn, das obere und das untere Werkzeugteil;
- Fig. 3: eine schematische Ansicht des Dorns;
- Fig. 4: eine weitere schematische Querschnittsansicht durch das Bauteil, das obere und das untere Werkzeugteil mit eingezeichnetem Volumen;
- Fig. 5A: eine schematische Querschnittsansicht durch das geschlossene Werkzeug mit dem Bauteil vor dem Einführen des Dorns;
- Fig. 5B: eine schematische Querschnittsansicht durch das geschlossene Werkzeug mit dem Bauteil nach dem Einführen des Dorns;
- Fig. 5C: eine schematische Querschnittsansicht durch das Bauteil mit dem hergestellten Loch;
- Fig. 6A: eine schematische Querschnittsansicht durch eine weitere Ausführungsform des geschlossenen Werkzeugs mit dem Bauteil vor dem Einführen des Dorns;
- Fig. 6B: eine schematische Querschnittsansicht durch die weitere Ausführungsform des geschlossenen Werkzeugs mit dem Bauteil nach dem Einführen des Dorns;
- Fig. 6C: eine schematische Querschnittsansicht durch die weitere Ausführungsform des Bauteils mit dem hergestellten Loch;
- Fig. 7: eine schematische Querschnittsansicht durch eine weitere Ausführungsform des geschlossenen Werkzeuges mit dem Bauteil vor dem Einführen des Dorns;
- Fig. 8: eine schematische Querschnittsansicht durch eine weitere Ausführungsform des geschlossenen Werkzeuges mit dem Bauteil vor dem Einführen des Dorns; und
- Fig. 9: eine schematische Querschnittsansicht durch eine weitere Ausführungsform des geschlossenen Werkzeuges mit dem Bauteil vor dem Einführen des Dorns.

Es folgt die Erläuterung der Erfindung anhand der Zeichnungen nach Aufbau und nach Wirkungsweise der dargestellten Erfindung.

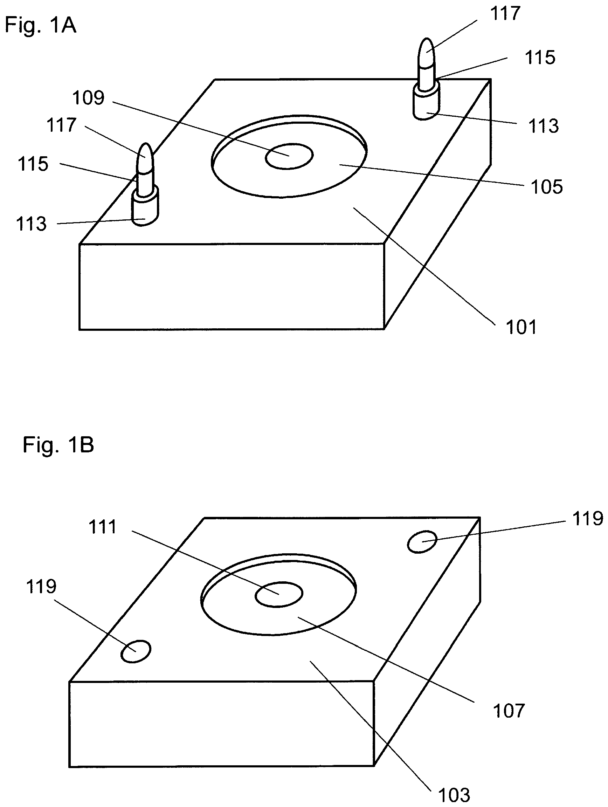

Fig. 1A zeigt eine schematische, perspektivische Darstellung eines oberen Werkzeugteils 101 mit einer kreisförmigen Öffnung 109 zum Durchführen eines Dorns. Das obere Werkzeugteil 101 umfasst zwei Führungsstifte 115 mit jeweils einer abgerundeten Spitze 117 und einem Bund 113.

Die Führungsstifte 115 dienen zum Führen eines gegenüberliegenden unteren Werkzeugteils, so dass dieses beim Schließen des Werkzeugs an eine exakt vorgegebene Position geführt wird. Der Führungsstift 115 kann ohne Spitze 117 eine Führungslänge von beispielsweise 15 mm und einen Durchmesser von 10 mm aufweisen. Der Bund 113 kann beispielsweise einen Durchmesser von 20 mm und eine Bundhöhe von 8 mm aufweisen. In anderen Ausführungsformen können jedoch andere Abmessungen gewählt werden.

Weiter umfasst das obere Werkzeugteil 101 die Öffnung 109 durch die ein Dorn zum Herstellen eines Loches hindurchgeführt werden kann. Die Öffnung 109 weist einen kreisförmigen Querschnitt auf und dient zum Führen eines im Querschnitt kreisförmigen Dorns mit einem entsprechenden Durchmesser. Der Durchmesser der kreisförmigen Öffnung 109 kann beispielsweise 16 mm betragen.

Der Dorn wird zum Erzeugen von im Querschnitt kreisförmigen Löchern verwendet, deren Durchmesser dem Durchmesser des Dorns entspricht. In alternativen Ausführungsformen kann die Öffnung 109 und der Dorn jedoch einen anderen Querschnitt aufweisen, wie beispielsweise dreieckig, viereckig, quadratisch, fünfeckig, n-eckig, oval oder halbkreisförmig. Dadurch lassen sich durch das Werkzeug je nach Querschnitt der Öffnung 109 und des Dorns Löcher mit einem beliebigen Querschnitt herstellen.

Konzentrisch um die Öffnung 109 herum weist das obere Werkzeugteil 101 eine kreisscheibenförmige Vertiefung oder Kavität 105 auf. Daneben kann die Vertiefung 105 einen abgeschrägten, äußeren Rand aufweisen, der beispielsweise eine Abschrägung von 45° aufweist. Die scheibenförmige Vertiefung 105 kann beispielsweise eine Tiefe von 3 mm und einen Durchmesser von 24 mm aufweisen.

Das obere Werkzeugteil 101 kann aus Aluminium, Stahl oder einem anderen Material hergestellt sein, das sich als Form für das zu fertigende Bauteil eignet.

Fig. 1B zeigt eine schematische, perspektivische Darstellung eines unteren Werkzeugteils 103 mit einer Öffnung 111 zum Einführen des Dorns und einer Vertiefung oder Kavität 107 zum Aufnehmen von verdrängtem Material. Das untere Werkzeugteil 103 weist die beiden Bohrungen 119 auf, die der Form der in Verbindung mit Fig. 1A beschriebenen Führungsstifte 115 entsprechen. Beim Schließen des Werkzeuges dringen die Führungsstifte 117 in die Bohrungen 119 ein und sorgen für eine exakte Positionierung und Fixierung des oberen Werkzeugteils 101 und des unteren Werkzeugteils 103 gegeneinander.

In einer alternativen Ausführungsform weist statt dem oberen Werkzeugteil 101 das untere Werkzeugteil 103 ein oder mehrere Führungsstifte auf, die in entsprechende Bohrungen in dem oberen Werkzeugteil 101 eindringen. In noch einer anderen Ausführungsform kann auf die Führungsstifte und die Bohrungen verzichtet werden.

Im Übrigen entspricht das untere Werkzeugteil 103 aus Fig. 1B dem oberen Werkzeugteil 101 aus Fig. 1A.

Beim Aufsetzen des oberen und des unteren Werkzeugteils 101 und 103 auf ein Bauteil wird durch die beiden Vertiefungen 105 und 107 ein Hohlraum oder eine Kavität gebildet, die geeignet sind, das beim Herstellungsvorgang des Loches durch den Dorn verdrängte Material des Bauteils gezielt aufzunehmen. In besonders geeigneter Weise lassen sich hierdurch Löcher mit einem Durchmesser von 5 mm bis 20 mm in Bauteilen herstellen. Das Loch kann einen kreisförmigen oder einen ovalen Querschnitt aufweisen und als sogenanntes Langloch gebildet sein.

Im Allgemeinen kann die Kavität statt einer Kreisscheibenform jede beliebige Form aufweisen, solange das beim Herstellungsvorgang des Loches verdrängte Material in dieser aufgenommen werden kann. Obwohl das Gesamtvolumen der Kavität bei eingeführtem Dorn grundsätzlich größer oder auch geringfügig kleiner als das Volumen des durch den Dorn verdrängten Materials sein kann, beispielweise um das Material bei der Formgebung etwas zu komprimieren, ist es besonders vorteilhaft, wenn sich beide Volumen einander entsprechen, da in diesem Fall das verdrängte Material vollständig und spannungsfrei zur Formgestaltung des Loches verwendet werden kann und eine lokale Spannung um das Loch gesenkt wird.

Die Kavität zum Aufnehmen des verdrängten Materials kann durch beide Vertiefungen 105 und 107 des oberen und des unteren Werkzeugteils 101 und 103 zusammen gebildet werden oder jeweils durch eine der Vertiefungen 105 oder 107 einzeln.

Das Bauteil kann aus einem thermoplastischen, endlos-faserverstärkten und/oder duroplastischen, endlos-faserverstärkten Kunststoff bestehen.

Thermoplastische Kunststoffe können beispielsweise Polypropylen (PP), Polystyrol (PS), Polyvinylchlorid (PVC), Polyacrylnitril (PAN), Polyamide (PA), Polyethylen (PE), Polyester (PES), Polycarbonat (PC), Polyetheretherketon (PEEK), Polyphenylensulfid (PPS),

Polysulfon (PSU), Polyetherimid (PEI), Polytetrafluorethen (PTFE) oder Polyacrylate umfassen.

Duroplastische Kunststoffe können beispielsweise Polyester (PES), Formaldehydharze, Epoxidharze oder Polyurethane umfassen.

Faserverstärkte Kunststoffe bestehen aus Verstärkungsfasern und einer Kunststoffmatrix. Die Matrix umgibt die Fasern, die wiederum durch Adhäsiv- oder Kohäsivkräfte an die Matrix gebunden sind. Als Matrix kommen beispielsweise die oben genannten thermoplastischen oder duroplastischen Kunststoffe in Betracht, während die Fasern aus Aramidfasern, Kohlenstofffasern, Polyester-Fasern, Nylon-Fasern, Polyethylen-Fasern, Metall-Fasern, Fasern aus nachwachsenden Rohstoffen, Mineral-Fasern, Basalt-Fasern, Glasfasern, Plexiglas-Fasern oder anderen Fasern gebildet sein können.

Derartige faserverstärkten Kunststoffe weisen oftmals eine Form als Fasermatte oder Fasergelege auf und werden als Prepregs bezeichnet. Zur Verwendung in der vorliegenden Erfindung weisen diese Fasermatten oder Fasergelege vorteilhafterweise eine Dicke von mehr als 4 mm auf. Zusätzlich können die Fasermatten oder Fasergelege Faserlagen mit unterschiedlichen Orientierungen aufweisen, wie beispielsweise 90° - 0° - 90° oder 60° - 0° - 60°.

Besonders vorteilhaft ist die Verwendung des oben geschilderten Werkzeugs bei einem Bauteil aus endlos-faserverstärkten Kunststoff, da beim Erzeugen des Loches die Fasern des Bauteils weitgehend unversehrt und ohne Schädigung bleiben und die anliegende Spannung der Fasern oder des Materials verringert wird.

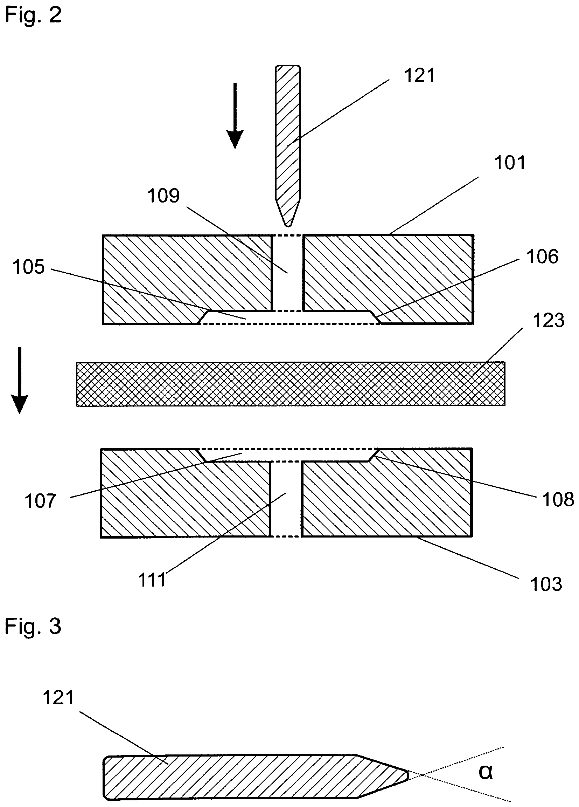

Fig. 2 zeigt eine schematische Querschnittsansicht durch ein Bauteil 123, den Dorn 121, das obere und das untere Werkzeugteil 101 und 103. Die Vertiefungen 105 und 107 umfassen einen äußeren, abgeschrägten Rand 106 und 108. Die übrigen Bezugszeichen entsprechen den oben Beschriebenen.

Das Bauteil 123 befindet sich zwischen dem oberen Werkzeugteil 101 und dem unteren Werkzeugteil 103, während sich das Werkzeug in einem geöffneten Zustand befindet. In einem nächsten Schritt werden das obere Werkzeugteil 101 und das untere Werkzeugteil 103 mit minimalem Formschließdruck, wie beispielsweise 10-15 Bar, auf das Bauteil 123 gesetzt oder aufgelegt und der Dorn 121 wird in die Öffnung 109 eingeführt. Ein nachfolgender Konsolidierungsdruck kann vorteilhafterweise um den Faktor 8 bis 15 höher sein und beispielsweise 100 bar betragen. Eine dementsprechende Konsolidierungstemperatur des Bauteils beträgt bei Polypropylen (PP) beispielsweise 240°C.

Fig. 3 zeigt eine schematische Ansicht des Dorns 121. Der Dorn kann aus Stahl oder einem anderen Material gefertigt sein, das eine ausreichende Festigkeit aufweist. Die Länge des im Querschnitt kreisförmigen Dorns 121 kann ohne Spitze 55 mm betragen und einen Durchmesser von 16 mm aufweisen. Die Spitze des Dorns 121 ist verrundet, um beispielsweise eine Beschädigung von Fasern im Bauteil zu verhindern. Besonders vorteilhaft ist, wenn der Dorn einen Spitzenwinkel α von 30° aufweist, da sich bei diesem Winkel das Material besonders gut derart verdrängen lässt, das dieses die Kavität ausfüllt. In einer alternativen Ausführungsform weist der Dorn einen Spitzenwinkel α in einem Winkelbereich zwischen 10° und 50° auf, wie beispielsweise 25°.

Im Allgemeinen können jedoch auch andere Winkel und Formen verwendet werden.

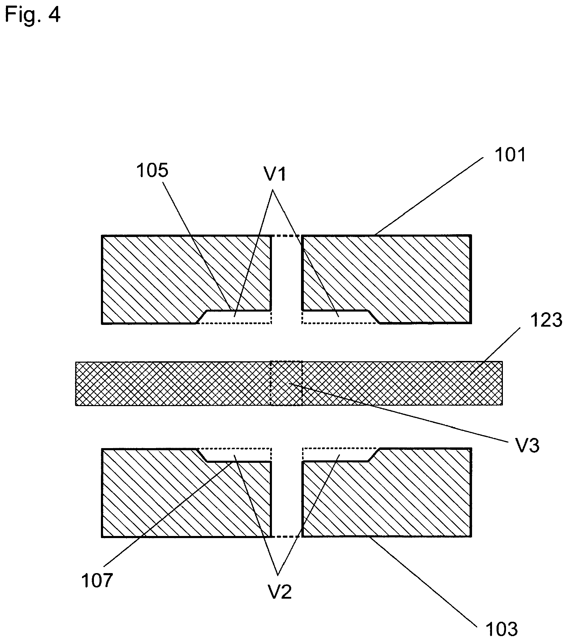

Fig. 4 zeigt eine weitere schematische Querschnittsansicht durch das Bauteil 123, das obere und das untere Werkzeugteil 101 und 103 mit den eingezeichneten Volumen V1, V2 und V3.

Sowohl das obere Werkzeugteil 101 als auch das untere Werkzeugteil 103 weisen die Vertiefung 105 und 107 auf. Die Kavität zum Aufnehmen des verdrängten Materials wird in dieser Ausführungsform durch die beiden Vertiefungen 105 und 107 gebildet und weist bei eingeführtem Dorn das Gesamtvolumen V1+V2 auf. Das verdrängte Material befindet sich im Volumen V3 des Bauteils. Besonders vorteilhaft ist es, wenn sich die Volumen V1+V2 und V3 einander entsprechen. Das verdrängte Volumen entspricht in diesem Fall dem aufgebauten Volumen und es entsteht kein Materialverlust.

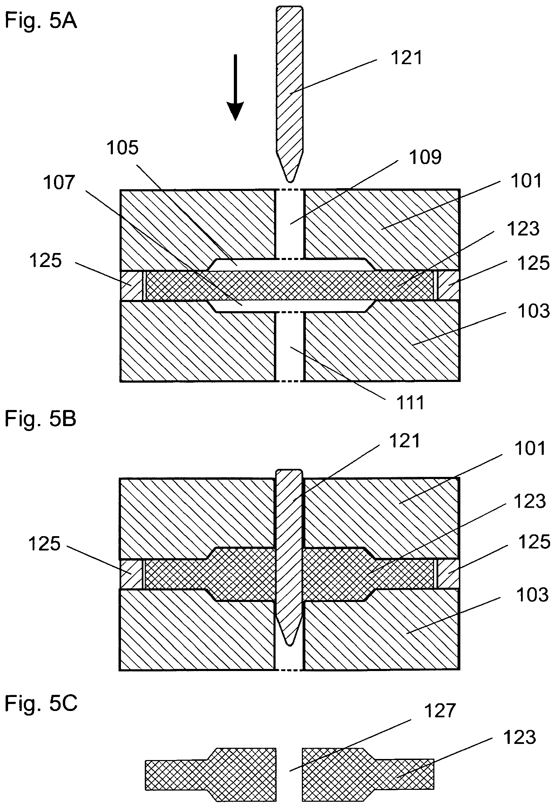

Fig. 5A zeigt eine schematische Querschnittsansicht durch das geschlossene Werkzeug mit dem Bauteil 123 vor dem Einführen des Dorns 125. Das untere Werkzeug 103 umfasst die Abstandshalter 125, die dazu dienen, dass zwischen den beiden Werkzeugteilen 101 und 103 ein vorgegebener Abstand beim Schließen des Werkzeugs eingehalten wird. Die Abstandhalter 125 können eine Höhe von 8 mm und einen gegenseitigen Abstand von 92 mm aufweisen. Gleichzeitig können die Abstandshalter 125 als Formbegrenzer für die durch das Werkzeug gebildete Form dienen. Die übrigen Bezugszeichen sind in Zusammenhang mit den vorangegangenen Figuren erklärt.

Das obere und das untere Werkzeug 101 und 103 liegen auf den gegenüberliegenden Seiten des Bauteils 123 auf und der Dorn 121 befindet sich außerhalb des Werkzeugs. In diesem Zustand hat noch keine Verdrängung von Material in die Kavität stattgefunden.

Fig. 5B zeigt eine schematische Querschnittsansicht durch das geschlossene Werkzeug mit dem Bauteil 123 nach dem Einführen des Dorns 121. In diesem Zustand ist das Material des Bauteils 123 durch den Dorn 121 in die Kavität verdrängt. Die Kavität füllt sich bei diesem Prozess vollständig mit dem Material des Bauteils 123. Das Material verfestigt sich in der Kavität, so dass die durch die Kavität vorgegebene Form des Bauteils 123 auch nach dem Entfernen des Werkzeugs erhalten bleibt. Dadurch bildet sich um den Rand des Loches eine Überhöhung.

Fig. 5C zeigt eine schematische Querschnittsansicht durch das geformte Bauteil 123 mit dem hergestellten Loch 127 mit der durch die Kavität erzeugten Verstärkung.

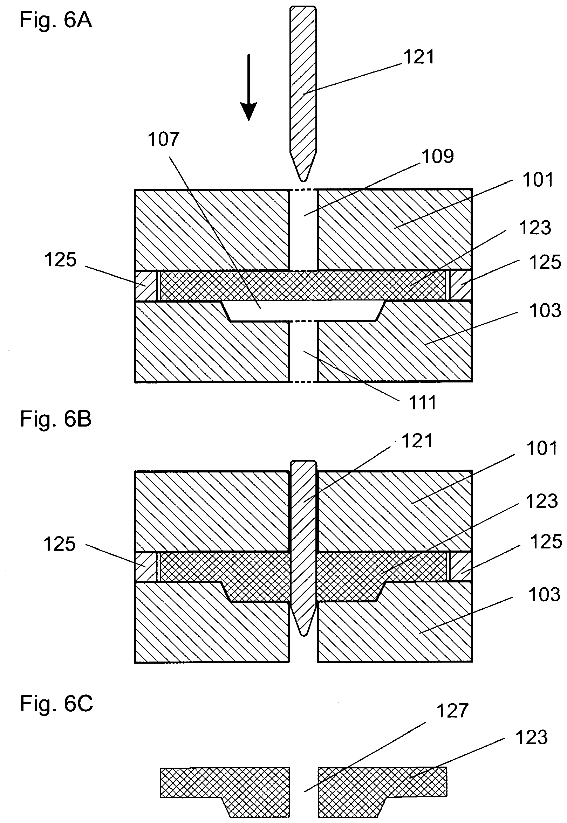

Fig. 6A zeigt eine schematische Querschnittsansicht durch eine weitere Ausführungsform des geschlossenen Werkzeugs mit dem Bauteil 123 vor dem Einführen des Dorns 121. Da in dieser Ausführungsform das obere Werkzeugteil 101 keine Vertiefung aufweist, wird die Kavität lediglich durch die Vertiefung 107 des unteren Werkzeugs erzeugt. Die übrigen Bezugszeichen sind in Zusammenhang mit den vorangehenden Figuren erklärt.

Fig. 6B zeigt eine schematische Querschnittsansicht durch die weitere Ausführungsform des geschlossenen Werkzeugs mit dem Bauteil 123 nach dem Einführen des Dorns 121. Durch das Einführen des Dorns 121 in die Öffnungen 109 und 111 wird das Material, in die durch die Vertiefung 107 des unteren Werkzeugteils 103 gebildete Kavität gedrückt. Dadurch ergibt sich ein Bauteil mit einer anderen Form als der in Fig. 5C gezeigten.

Fig. 6C zeigt eine schematische Querschnittsansicht durch das Bauteil 123 mit dem hergestellten Loch 127, das mit dem Werkzeug gemäß Fig. 6A und 6B hergestellt worden ist. Die Verstärkung des Loches 127 befindet sich an der Unterseite des Bauteils 123.

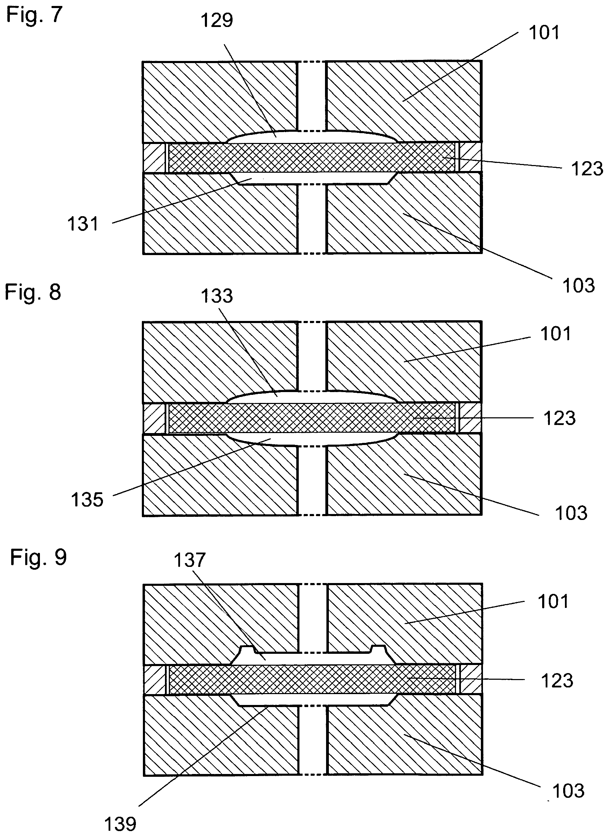

Fig. 7 zeigt eine schematische Querschnittsansicht durch eine weitere Ausführungsform des geschlossenen Werkzeuges mit dem Bauteil 123 vor dem Einführen des Dorns. In dieser Ausführungsform weist das obere Werkzeugteil 101 eine kreisförmige und konkave Vertiefung 129 auf, deren Tiefe zur Öffnung des Werkzeugteils 101 hin zunimmt, wohingegen das untere Werkzeugteil 103 eine kreisscheibenförmige Vertiefung 131 mit konstanter Tiefe aufweist. Die Kavität wird durch die beiden Vertiefungen 129 und 131 gebildet und erzeugt nach dem Einführen des Dorns 121 in das Werkzeug eine entsprechende Form des Bauteils 123.

Fig. 8 zeigt eine schematische Querschnittsansicht durch eine weitere Ausführungsform des geschlossenen Werkzeuges mit dem Bauteil 123 vor dem Einführen des Dorns 121. In dieser Ausführungsform weist das obere und das untere Werkzeugteil 101 und 103 eine kreisförmige und konkave Vertiefung 133 und 135 auf, deren Tiefen zur Öffnung des Werkzeugteils 101 hin zunehmen. Die Kavität wird durch die beiden Vertiefungen 133 und 135 gebildet und erzeugt nach dem Einführen des Dorns 121 in das Werkzeug eine entsprechende Form des Bauteils 123.

Fig. 9 zeigt eine schematische Querschnittsansicht durch eine weitere Ausführungsform des geschlossenen Werkzeuges mit dem Bauteil 123 vor dem Einführen des Dorns 121. In dieser Ausführungsform weist das obere und das untere Werkzeugteil 101 und 103 eine kreisscheibenförmige Vertiefung 137 und 139 konstanter Tiefe auf. Zusätzlich ist in der Vertiefung 137 des oberen Werkzeugteils 101 ein kreisförmig umlaufender Vertiefungsring gebildet. Auch in dieser Ausführungsform wird die Kavität durch die beiden Vertiefungen 137 und 139 gebildet und erzeugt nach dem Einführen des Dorns 121 in das Werkzeug eine entsprechende Form des Bauteils 123. Diese Ausführungsform des Werkzeugs ist besonders vorteilhaft, da durch den umlaufenden Vertiefungsring ein Bauteil hergestellt werden kann, dass zusätzlich einen konzentrisch um das Loch umlaufenden und vorstehenden Ring aufweist, der beispielsweise bei einer Verbindung des erzeugten Lochs mit einem anderen Bauteil ein seitliches Eindringen von Schmutz oder einer Flüssigkeit verhindert.

Im Allgemeinen ist die vorliegende Erfindung jedoch nicht auf die abgebildeten Vertiefungen und Kavitäten beschränkt, sondern es können beliebig geformte Vertiefungen in den Werkzeugteilen als Kavität verwendet werden, die in der Lage sind, das verdrängte Material aufzunehmen. Dadurch lassen sich Löcher in Bauteilen mit nahezu beliebiger Form realisieren.

In allen Ausführungsformen des Werkzeugs kann zusätzlich eine Heizvorrichtung zum Erwärmen des Dorns 121, eine Heizvorrichtung zum Erwärmen eines oder beider Werkzeugteile 101 und 103 im Bereich des vorgesehenen Loches und/oder eine Heizvorrichtung zum Erwärmen des Bauteils 123 vorgesehen sein.

Eine Heizvorrichtung zum Erwärmen des Dorns 121 könnte beispielsweise durch eine Heizwendel im inneren des Dorns 121 gebildet sein. Die Heizvorrichtung zum Erwärmen eines Werkzeugteils 101 und 103 könnte ebenfalls durch eine Heizwendel im Inneren des Werkzeugteils gebildet sein. Die Heizvorrichtung zum Erwärmen des Bauteils 123 könnte beispielsweise durch eine Infrarotbestrahlungsvorrichtung oder einen Infrarotlaser gebildet sein, der das Material vor dem Einführen des Dorns 121 soweit erhitzt, dass es beim Herstellen des Loches die Kavität besonders effektiv ausfüllt.

Alle in den Fig. 1 - 9 gezeigten und in der Beschreibung beschriebenen Merkmale lassen sich in beliebiger Weise sinnvoll untereinander aus- oder vertauschen, um vorteilhafte Wirkungen der einzelnen Merkmale miteinander zu kombinieren.

Alle in den Fig. 1 - 9 gezeigten Ausführungsformen des Werkzeugs können lediglich Teil eines Press- und/oder Spritzgusswerkzeugs sein.

## Patentansprüche

1. Werkzeug zum Herstellen eines Lochs (127) in einem Bauteil (123) aus einem thermoplastischen, endlos-faserverstärkten und/oder duroplastischen, endlos-faserverstärkten Kunststoff mittels eines Dorns (121), mit:
- einem oberen Werkzeugteil (101) mit einer Öffnung (109) zum Durchführen des Dorns (121); und
- einem unteren Werkzeugteil (103) mit einer Öffnung (111) zum Einführen des Dorns (121);
wobei
das obere und/oder das untere Werkzeugteil (101, 103) an der Öffnung (109, 111) eine Kavität (105, 107) zum Aufnehmen des durch den Dorn (121) beim Herstellen des Loches (127) verdrängten Materials aufweist,
**dadurch gekennzeichnet, dass**
das Gesamtvolumen (V1+V2) der Kavität (105, 107) bei eingeführtem Dorn (121) dem Volumen (V3) des durch den Dorn (121) verdrängten Materials entspricht.

2. Werkzeug nach Anspruch 1, wobei die Kavität (105, 107) um die Öffnung (109, 111) des oberen und/oder unteren Werkzeugteils (101, 103) herum ausgebildet ist.

3. Werkzeug nach einem der vorangehenden Ansprüche, wobei die Kavität (105, 107) kreisförmig oder oval um die Öffnung (109, 111) des oberen und/oder unteren Werkzeugteils (101, 103) ausgebildet ist.

4. Werkzeug nach einem der vorangehenden Ansprüche, wobei die Kavität (105, 107) eine konstante Tiefe aufweist.

5. Werkzeug nach einem der vorangehenden Ansprüche, wobei der äußere Rand (106, 108) der Kavität (105, 107) abgeschrägt ist.

6. Werkzeug nach einem der vorangehenden Ansprüche, wobei die Tiefe der Kavität (129) zur Öffnung (109, 111) des oberen und/oder unteren Werkzeugteils (101, 103) hin zunimmt.

7. Werkzeug nach einem der vorangehenden Ansprüche, wobei die Kavität (129) eine konkave Form aufweist.

8. Werkzeug nach einem der vorangehenden Ansprüche, wobei der Dorn (121) einen Spitzenwinkel (α) im Bereich von 10° bis 60°, vorzugsweise im Bereich von 13° bis 45° weiter vorzugsweise im Bereich von 15° bis 30°, besonders bevorzugt im Bereich von 18° bis 25° aufweist.

9. Verfahren zum Herstellen eines Loches (127) in einem Bauteil (123) aus einem thermoplastischen, endlos-faserverstärkten und/oder duroplastischen, endlos-faserverstärkten Kunststoff mittels eines Dorns (121), mit den Schritten:
- Einlegen des Bauteils (123) in ein Werkzeug zwischen einem oberen Werkzeugteil (101) und einem unteren Werkzeugteil (103) mit jeweils einer Öffnung (109, 111) für den Dorn (121) und Schließen des Werkzeugs;
- Durchführen des Dorns (121) durch die Öffnung (109) des oberen Werkzeugteils (101) und Einführen des Dorns (121) in die Öffnung (111) des unteren Werkzeugteils (103) zum Herstellen des Loches (127) in dem Bauteil (123) und
- Aufnehmen des durch den Dorn (121) beim Herstellen des Loches (127) verdrängten Materials in einer Kavität (105, 107) in dem oberen und/oder unteren Werkzeugteil (101, 103),
**dadurch gekennzeichnet, dass**
das Gesamtvolumen (V1+V2) der Kavität (105, 107) bei eingeführtem Dorn (121) dem Volumen (V3) des durch den Dorn (121) verdrängten Materials entspricht.

10. Verfahren zum Herstellen eines Loches (127) in einem Bauteil (123) nach Anspruch 9, **dadurch gekennzeichnet, dass** sich der thermoplastische, endlos-faserverstärkte Kunststoff des Bauteils (123) bei Durchführung des Verfahrens in einem, vorzugsweise auf Konsolidierungs- oder Schmelztemperatur vorgewärmten, Zustand befindet.

11. Verfahren zum Herstellen eines Loches (127) in einem Bauteil (123) nach Anspruch 10, **dadurch gekennzeichnet, dass** sich der thermoplastische, endlos-faserverstärkte Kunststoff des Bauteils (123) in einem auf Konsolidierungs- oder Schmelztemperatur vorgewärmten Zustand befindet.

12. Verfahren zum Herstellen eines Loches (127) in einem Bauteil (123) nach Anspruch 9, **dadurch gekennzeichnet, dass** sich der duroplastische, endlos-faserverstärkte Kunststoff des Bauteils (123) bei Durchführung des erfindungsgemäßen Verfahrens in einem unvernetzten oder teilvernetzten Zustand befindet.

## Claims

1. A tool for producing a hole (127) in a component (123) composed of a thermoplastic, continuous-fibre-reinforced and/or thermoset, continuous-fibre-reinforced polymer by means of a mandrel (121), having:
- an upper tool part (101) having an opening (109) for passing through the mandrel (121); and
- a lower tool part (103) having an opening (111) for inserting the mandrel (121);
wherein
the upper and/or lower tool part (101, 103) have/has at the opening (109, 111) a cavity (105, 107) for receiving the material displaced by the mandrel (121) when the hole (127) is produced,
**characterised in that**
the total volume (V1 + V2) of the cavity (105, 107) with the mandrel (121) inserted corresponds to the volume (V3) of the material displaced by the mandrel (121).

2. The tool according to claim 1, wherein the cavity (105, 107) is formed around the opening (109, 111) of the upper and/or lower tool part (101, 103).

3. The tool according to one of the preceding claims, wherein the cavity (105, 107) is formed in a circular or oval shape around the opening (109, 111) of the upper and/or lower tool part (101, 103).

4. The tool according to one of the preceding claims, wherein the cavity (105, 107) has a constant depth.

5. The tool according to one of the preceding claims, wherein the outer edge (106, 108) of the cavity (105, 107) is chamfered.

6. The tool according to one of the preceding claims, wherein the depth of the cavity (129) increases towards the opening (109, 111) of the upper and/or lower tool part (101, 103).

7. The tool according to one of the preceding claims, wherein the cavity (129) has a concave shape.

8. The tool according to one of the preceding claims, wherein the mandrel (121) has a tip angle (α) in the range of 10° to 60°, preferably in the range of 13° to 45°, more preferably in the range of 15° to 30° and particularly preferably in the range of 18° to 25°.

9. A method for producing a hole (127) in a component (123) composed of a thermoplastic, continuous-fibre-reinforced and/or thermoset, continuous-fibre-reinforced polymer by means of a mandrel (121), having the steps of:
- placing the component (123) into a tool between an upper tool part (101) and a lower tool part (103), each having an opening (109, 111) for the mandrel (121), and closing the tool;
- passing the mandrel (121) through the opening (109) of the upper tool part (101) and inserting the mandrel (121) into the opening (111) of the lower tool part (103) to produce the hole (127) in the component (123) and
- receiving the material displaced by the mandrel (121) when the hole (127) is produced in a cavity (105, 107) in the upper and/or lower tool part (101, 103),
**characterised in that**
the total volume (V1 + V2) of the cavity (105, 107) with the mandrel (121) inserted corresponds to the volume (V3) of the material displaced by the mandrel (121).

10. The method for producing a hole (127) in a component (123) according to claim 9, **characterised in that**, when the method is performed, the thermoplastic, continuous-fibre-reinforced polymer of the component (123) is in a state of having been pre-heated, preferably to consolidation temperature or melting point.

11. The method for producing a hole (127) in a component (123) according to claim 10, **characterised in that** the thermoplastic, continuous-fibre-reinforced polymer of the component (123) is in a state of having been pre-heated to consolidation temperature or melting point.

12. The method for producing a hole (127) in a component (123) according to claim 9, **characterised in that**, when the method according to the invention is performed, the thermoset, continuous-fibre-reinforced polymer of the component (123) is in an uncrosslinked or partially crosslinked state.

## Revendications

1. Outil destiné à fabriquer un trou (127) dans un composant (123) constitué d'une matière plastique thermoplastique, renforcée par fibres sans fin et/ou thermodurcissable, renforcée par fibres sans fin, au moyen d'un mandrin (121), comprenant :
- une partie supérieure d'outil (101) munie d'une ouverture (109) destinée au passage du mandrin (121) ;
- une partie inférieure d'outil (103) munie d'une ouverture (111) destinée à introduire le mandrin (121) :
la partie supérieure et/ou la partie inférieure d'outil (101, 103) présentant sur l'ouverture (109, 111) une cavité (105, 107) destinée à loger la matière déplacée par le mandrin (121) lors de la fabrication du trou (127),
**caractérisé en ce que**
le volume total (V1 + V2) de la cavité (105, 107) avec le mandrin inséré (121) correspond au volume (V3) de la matière déplacée par le mandrin (121).

2. Outil selon la revendication 1, la cavité (105, 107) étant réalisée autour de l'ouverture (109, 111) de la partie supérieure et/ou de la partie inférieure d'outil (101, 103).

3. Outil selon l'une quelconque des revendications précédentes, la cavité (105, 107) étant réalisée de manière circulaire ou ovale autour de l'ouverture (109, 111) de la partie supérieure et/ou de la partie inférieure d'outil (101, 103).

4. Outil selon l'une quelconque des revendications précédentes, la cavité (105, 107) présentant une profondeur constante.

5. Outil selon l'une quelconque des revendications précédentes, le bord extérieur (106, 108) de la cavité (105, 107) étant oblique.

6. Outil selon l'une quelconque des revendications précédentes, la profondeur de la cavité (129) augmentant en direction de l'ouverture (109, 111) de la partie supérieure et/ou de la partie inférieure d'outil (101, 103).

7. Outil selon l'une quelconque des revendications précédentes, la cavité présentant une forme concave.

8. Outil selon l'une quelconque des revendications précédentes, le mandrin (121) présentant un angle aigu (α) situé dans la plage de 10° à 60°, de préférence dans la plage de 13° à 45°, en outre de préférence dans la plage de 15° à 30°, de manière particulièrement préférée dans la plage de 18° à 25°.

9. Procédé de fabrication d'un trou (127) dans un composant (123) constitué d'une matière plastique thermoplastique, renforcée par fibres sans fin et/ou thermodurcissable, renforcée par fibres sans fin, au moyen d'un mandrin (121), comprenant les étapes :
- pose du composant (123) dans un outil entre une partie supérieure d'outil (101) et une partie inférieure d'outil (103) munies respectivement d'une ouverture (109, 111) pour le mandrin (121) et fermeture de l'outil ;
- passage du mandrin (121) à travers l'ouverture (109) de la partie supérieure d'outil (101) et introduction du mandrin (121) dans l'ouverture (111) de la partie inférieure d'outil (103) pour la fabrication du trou (127) dans le composant (123), et
- logement, dans une cavité (105, 107) dans la partie supérieure et/ou dans la partie inférieure d'outil (101, 103), de la matière déplacée par le mandrin (121) lors de la fabrication du trou (127),
**caractérisé en ce que**
le volume total (V1 + V2) de la cavité (105, 107) avec le mandrin inséré (121) correspond au volume (V3) de la matière déplacée par le mandrin (121).

10. Procédé de fabrication d'un trou (127) dans un composant (123) selon la revendication 9, **caractérisé en ce que** la matière plastique thermoplastique, renforcée par fibres sans fin, du composant (123), lors de la réalisation du procédé, se trouve dans un état préchauffé, de préférence à température de consolidation ou de fusion.

11. Procédé de fabrication d'un trou (127) dans un composant (123) selon la revendication 10, **caractérisé en ce que** la matière plastique thermoplastique, renforcée par fibres sans fin, du composant (123) se trouve dans un état préchauffé à température de consolidation ou de fusion.

12. Procédé de fabrication d'un trou (127) dans un composant (123) selon la revendication 9, **caractérisé en ce que** la matière plastique thermodurcissable, renforcée par fibres sans fin, du composant (123), lors de la réalisation du procédé conforme à l'invention, se trouve dans un état non réticulé ou partiellement réticulé.
